# EUROPEAN PATENT SPECIFICATION

(11) **EP 1 893 473 B1**
(45) Date of publication and mention of the grant of the patent: **23.12.2009**
(21) Application number: 06747545.9
(22) Date of filing: 15.05.2006
(51) Int. Cl.: B62K 5/08, B62K 5/04

(54) **VEHICLE WITH AT LEAST THREE WHEELS**
FAHRZEUG MIT MINDESTENS DREI RÄDERN
VEHICULE EQUIPE D AU MOINS TROIS ROUES

(30) Priority: 13.05.2005 NL 1029054
(43) Date of publication of application: 05.03.2008
(73) Proprietor: Thissen, Hendrikus Petrus Martinus, 5383 KK Vinkel (NL)
(72) Inventor: Thissen, Hendrikus Petrus Martinus, 5383 KK Vinkel (NL)
(74) Representative: Wijnstra, Reinier
(86) International application number: PCT/NL2006/000250
(87) International publication number: WO 2006/121333

(56) References cited:
- EP-A- 1 391 374
- US-A- 4 277 078
- US-A- 4 903 857
- US-A- 4 993 733
- US-A- 5 536 029
- US-A- 6 086 078

## Description

The invention relates to a vehicle with at least three wheels, according to the preamble of claim 1. Such vehicles exist in many different forms. Known forms are carrier cycles, three-wheeled recumbent cycles, motor-assisted or otherwise, and also motorized vehicles, for example for urban transport or for invalid or semi-invalid users.

US-4.903.857 discloses a three-wheeled cycle with a rear frame and a front frame. The rear and front frames are rotatably connected to each other about an obliquely placed pivot. Two front wheels are provided on respective arms, which in turn are rotatably connected to the front frame. The arms are driven by way of push/pull rods, which in turn are operated by way of a steering with continuous shaft. The object of the known cycle is to compensate for centrifugal forces by making the rear frame slant in a bend. For this purpose, the steering shaft can act upon the rear frame by way of a separate transmission mechanism. The shaft between the rear frame and the front frame in this case serves to make the tilting of the rear frame relative to the front frame possible.

A disadvantage of the known three-wheeled cycle is that it functions optimally only at a predetermined speed. This is because the slanting position assumed by the rear frame is solely dependent upon the travel of the steering, so that at a low speed the tilt is too great and at a higher speed there is too little tilt. Particularly with a combination of a relatively small bend radius and a relatively high speed, the stability of the known cycle can be too low, with the result that there is a danger of the cycle falling over.

The present invention aims to overcome the abovementioned disadvantage at least partially, or at any rate to provide an alternative. In particular, the invention aims to provide a vehicle with greater stability in bends.

The invention achieves the object by means of a vehicle according to claim 1. The vehicle comprises a main frame, provided with at least a first wheel, which main frame and first wheel extend substantially in a longitudinal direction of the vehicle, a subframe connected to the main frame at a distance from the first wheel, a left bearing frame movably connected to the subframe and at a left wheel position provided with a left wheel, a right bearing frame movably connected to the subframe and at a right wheel position provided with a right wheel, and connecting means for connecting the main frame and the bearing frames to the subframe in such a way that the left and the right bearing frames can swivel relative to the main frame in order to make the vehicle in use follow a bend, the left or the right wheel following the outside of a bend. The connecting means comprise swivelling means with a swivel axis or a real swivel pin, for swivellably connecting the main frame and the subframe in order to determine a direction of movement of the vehicle in use. This means that the left and right wheels can swivel as a result of a swivelling of the subframe. Said swivelling of the subframe can fully determine the swivel of the wheels, or it can be additional to a possible swivel of the bearing frames relative to the subframe. The vehicle further comprises an adjusting mechanism which acts upon the bearing frames to make the wheel which is following an outside of the bend move away from the swivelling means, in order to increase the stability of the vehicle.

Making the bearing frame of the wheel which is following the outside of the bend move outwards relative to the connecting means causes the moment arm between the centre of gravity of the vehicle and the outside wheel to increase. This greater arm increases the reset moment, the moment which holds the vehicle straight against the tilting effect of the centrifugal force. The stability of the vehicle according to the invention is increased in this way.

It is pointed out that US-4.903.857 shows that the outside wheel of the three-wheeled cycle is actually moved inwards. The teaching of the illustrated solution is therefore away from that of the invention.

US-4.993.733 discloses a three wheeled cycle with a main frame, and a front axle bar. One wheel is attached to the main frame, while the other two wheels are attached to the ends of the front axle bar. At the front end of the main frame is an angularly inclined pivot mechanism, which includes an outer shell welded to the main frame and an inner rotatable member. The front axle bar is connected to the rotatable member 32. The front axle bar radiates backwardly, outwardly, and upwardly. As the vehicle turns left, the right wheel moves to such a position that the point where the wheel touches the ground is at a greater distance from the vehicle centre line than when the vehicle is headed straight.

Advantageous embodiments are described in the subclaims.

In particular, the adjusting mechanism is connected to the main frame in such a way that a swivelling of the subframe relative to the main frame drives the adjusting mechanism in order to make the wheel which is following the outside of the bend move outwards. This produces a connection between swivelling of the subframe and the movement outwards, so that a greater swivel also results in a greater movement.

More particularly, the adjusting mechanism comprises a left and a right push/pull rod, each of which is swivellably connected at a first end to an action point of the main frame and is swivellably connected at a second end to a drive position of the left and right bearing frames respectively. This produces a simple and robust adjusting mechanism.

Yet more particularly, in a neutral position of the subframe the left and right push/pull rods do not stand at right angles relative to the longitudinal direction on the main frame, in order to make the bearing frames swivel to different degrees when there is a certain swivel of the subframe. This means, for example, that the outside wheel can be made to swivel relative to the main frame to a degree which corresponds to a greater bend radius, while the inside wheel can be made to swivel relative to the main frame to a degree which corresponds to a smaller bend radius.

In one embodiment the left and right wheel positions in a neutral position of the subframe are each at a shorter distance from the first wheel than the swivel pin. This measure reinforces the increase in the reset moment in that a swivel of the subframe about the swivel pin results in an outward movement of the outside wheel relative to the centre of gravity of the vehicle.

In a special embodiment the connecting means comprise left and right rotation means, with hypothetical or real pivot pins, for swivellably connecting the left and right bearing frames respectively to the subframe. Rotation means can provide a robust way of moving the outside wheel outwards by rotating the bearing frame concerned.

In particular, the left and right pivot pins are directed outwards and upwards in order to make the subframe tilt when the bearing frames swivel about the corresponding pivot pin. Because of the abovementioned slanting orientation of the pivot pins, the outside wheel moves downwards, and the inside wheel moves upwards, relative to the subframe. In use, the wheels concerned will rest on a surface, so that the abovementioned movements result in an inward tilting of the subframe.

In particular, the left and right wheel positions are each at a shorter distance from the first wheel than the corresponding pivot pins. This means that a rotation of the corresponding bearing frame in the course of which the corresponding wheel moves outwards likewise results in a swivel of the corresponding wheel in the chosen bend direction.

More particularly, the left and right push/pull rods respectively each cross an imaginary line from the swivel pin to the corresponding pivot pin. In this way the corresponding push/pull rods drive the bearing frames in the same swivelling direction as the subframe, so that said swivels reinforce each other and a relatively small turning circle is obtained with a relatively small swivel of the subframe.

The invention also relates to a vehicle comprising: a main frame provided with at least one wheel; and a subframe provided with at least two wheels, in which the subframe is swivellable relative to the main frame about a swivel pin in order to determine a direction of movement of the vehicle in use, in which the subframe for each of the at least two wheels is provided with a wheel suspension in such a way that when the subframe assumes a swivelling direction relative to the main frame each wheel of the subframe is swivellable relative to the subframe in the same swivelling direction as the subframe, in which each wheel suspension is provided with a bearing frame which is connected to the subframe so as to be swivellable about a pivot pin and to which the wheel concerned is rotatably connected in such a wheel position relative to the pivot pin that said wheel position relative to the pivot pin per se contributes to a reduction of a turning circle which the vehicle can follow when both the subframe and each bearing frame have assumed a swivel position.

In addition to the reduction the turning circle by means of the swivelling ability of each wheel relative to the subframe, it has surprisingly been found possible to reduce the turning circle further by placing the axle of a wheel at a suitably selected distance from the pivot pin of the bearing frame concerned.

The present invention provides an additional degree of freedom for obtaining a short turning circle by means of measures which are easy to achieve. The manufacture of such a vehicle can consequently be carried out relatively cheaply. Any repairs are uncomplicated and can therefore be completed relatively quickly by means of simple construction work.

In a special embodiment it is possible in the case of at least one of the bearing frames for the wheel position in a neutral position of the subframe relative to the main frame, viewed in a direction from the axis of the vehicle, to lie closer to the centre point of the vehicle than the swivel pin about which the subframe is rotatable. This permits an extremely simple and sturdy construction, as will become clear from the example described below.

It is also possible for at least one of the pivot pins to be directed outwards and upwards relative to the axis of the vehicle. This makes it possible, when a swivel occurs in the direction of the axis directed outwards and upwards, for the wheel connected to the bearing frame concerned to be moved upwards, or if the wheel is in a position resting on a surface, it allows a tilting of the subframe, and possibly the main frame along with it, towards the swivelling direction. This means that the bend can be taken stably at some speed. This effect will be explained in more detail in a discussion of the figures.

It is preferable for each of the pivot pins to be directed outwards and upwards relative to the axis of the vehicle. The tilting effect mentioned above in that case occurs on swivelling of the subframe in each of the two swivelling directions. This results in a stable vehicle which can be guided through virtually any bend.

The subframe is preferably provided with a transmission that is such that a swivel of the subframe relative to the main frame in a selected swivelling direction causes a swivel of each bearing frame relative to the subframe in a swivelling direction opposite to the selected swivelling direction relative to the axis of the vehicle. As will emerge below from the description of the figures, this leads in a very simple manner to the reduction of a turning circle which the vehicle can make. In that case when a swivelling direction has been selected a person steering the vehicle need not take any further action to make each wheel connected to a bearing frame assume the desired swivelling direction.

It is possible for the transmission to be designed in such a way that each swivel position of the subframe relative to the main frame leads to a predetermined swivel position of each bearing frame relative to the subframe. It is therefore possible to predict the turning circle that is followed in a particular swivel position of the subframe relative to the main frame. This means that controlling the vehicle can be learned quickly.

It is also possible for the transmission to be provided with at least two rods which are each swivellably connected at a first end to an action point of the main frame, and for each bearing frame at a driving position of the bearing frame to be swivellably connected to a second end of one of the rods. This permits a very sound and simple construction for the transmission. The number of parts required for the construction is few. This means that the construction can be made relatively cheaply. Any repair work is also simple.

In one embodiment at least one action point in a neutral position of the subframe relative to the main frame, viewed in the direction of the axis of the vehicle, can be situated further from the centre point of the vehicle than the swivel pin.

The vehicle preferably comprises a cycle which is possibly provided with a motor. In the case of such vehicles in particular it is advantageous when travelling at a reasonable speed still to be able to take a short bend in a stable manner. This could enormously increase the potential uses of such a cycle.

The invention will now be explained with reference to a drawing, in which:
Figure 1a shows diagrammatically a top view of a first embodiment of a vehicle according to the invention in a neutral position;
Figure 1b shows diagrammatically a top view of the embodiment shown in Fig. 1a in a swivel position;
Figure 2a shows diagrammatically a rear view of the embodiment shown in Fig. 1a in a neutral position;
Figure 2b shows diagrammatically a rear view of the embodiment shown in Fig. 1a in a swivel position;
Figure 3a shows diagrammatically a rear view of a second embodiment of a vehicle according to the invention in a swivel position;
Figure 3b shows diagrammatically the embodiment shown in Fig. 3a with the wheels resting on a surface;
Figure 4a shows diagrammatically a top view of a third embodiment of a vehicle according to the invention in a neutral position;
Figure 4b shows diagrammatically the embodiment shown in Fig. 4a in a swivel position.

Comparable parts are provided with the same reference numerals in the drawings.

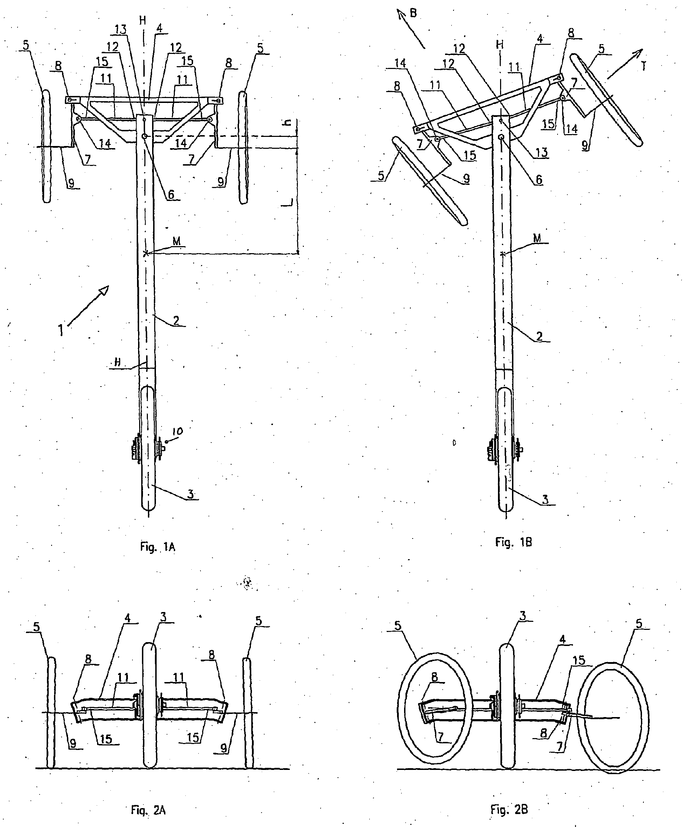

Fig. 1a shows diagrammatically a top view of a first embodiment of a vehicle 1 according to the invention. The vehicle comprises a main frame 2 provided with at least a first wheel 3, which extends in a longitudinal direction of the vehicle. The vehicle 1 also comprises a subframe 4 provided with at least two wheels 5, a left and a right wheel respectively. The subframe 4 can be swivelled relative to the main frame 2 about swivelling means, in this case a swivel pin 6, in order to determine a direction of movement of the vehicle 1 in use. Swivel pin 6 may possibly be an axis. In the exemplary embodiment shown the swivel pin 6 also acts as connecting means between main frame 2 and subframe 4. A centre M of the vehicle 1 is situated along an axis H of the main frame 2. The first wheel 3 and the subframe 4 are situated on either side of the centre M.

For each of the at least two wheels 5 the subframe 4 is provided with a wheel suspension and an adjusting mechanism in such a way that when the subframe 4 assumes a swivelling direction relative to the main frame 2, each wheel 5 can be swivelled relative to the subframe 4 in the same swivelling direction as the subframe 4. The embodiment shown in Fig. 1a is shown in the swivel position in Fig. 1b.

In the embodiment shown in Figs. 1a and 1b each wheel suspension is provided with a bearing frame 7 which is connected to the subframe 4 in such a way that it is swivellable about rotation means, in this example a pivot pin 8. In the example shown the bearing frame 7 is in the form of a wheel bearing arm. Each bearing frame 7 extends from its pivot pin 8 in a direction pointing substantially towards the first wheel 3, or towards the centre M. This is the approximate direction, since the actual direction of the bearing frames in a neutral position of subframes and bearing frames runs parallel to the axis H. The phrase "towards the first wheel" in this case corresponds to a direction in the backward direction of the vehicle. It is, however, conceivable to have a vehicle with a subframe and bearing frames on the rear side, in which case the subframes concerned actually extend in the forward direction of the vehicle.

The wheel 5 is rotatably connected to the bearing frame at such a wheel position 9 relative to the pivot pin 8 that said wheel position 9 relative to the pivot pin 8 per se contributes to the reduction of a turning circle which the vehicle 1'can follow when both the subframe 4 and each bearing frame 7 have assumed a swivel position. The wheel position 9 is diagrammatically shown by means of a wheel axle. The way in which the wheel 3 is connected to the main frame 2 is not shown in any further detail in Figs. 1a and 1b, since possible ways are known per se.

Generally speaking, the embodiment of a vehicle according to the invention shown in the figures can be provided with a steering (not shown), which is connected directly or indirectly to the subframe 4 in order to determine a direction of movement of the vehicle 1. It should also be clear that the vehicle 1 can be provided with, for example, a saddle and a drive by means of a chain which drives a gearwheel 10 of the wheel 3 when in use. For the sake of clarity of the figures, the saddle, steering and drive are not shown in any further detail in the illustrated embodiment. Generally speaking, swivel pin 6 can also be at right angles to a ground surface on which the vehicle rests, but it can also be in a position slightly slanting relative to said ground surface.

For each bearing frame it is possible for the wheel position in a neutral position of the subframe relative to the main frame, viewed in the direction of the axis of the vehicle, to lie closer towards the centre point of the vehicle than the swivel pin about which the subframe is rotatable. In Fig. 1a it is illustrated by means of line L that in a neutral position of the subframe relative to the main frame the wheel position 9 lies closer to the centre point M of the vehicle 1 than the swivel point 6 about which the subframe 4 is rotatable.

Viewed along the axis H, in this example it involves a difference along a distance h.

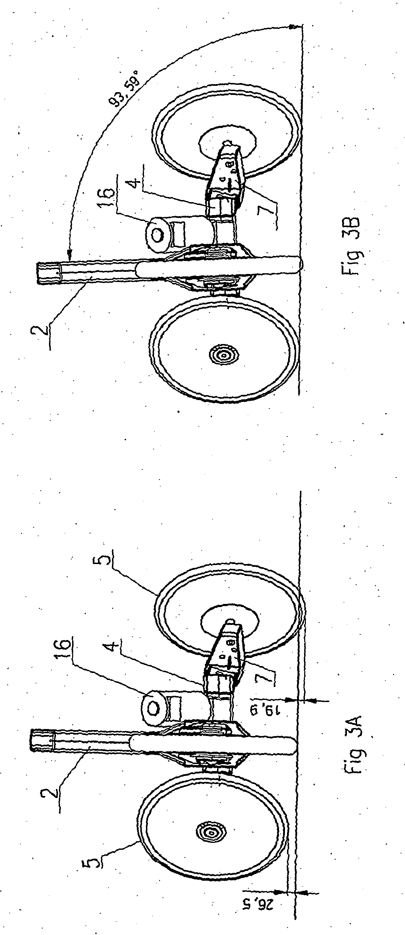

Fig. 2a shows diagrammatically a rear side of an embodiment shown in Fig. 1a. In the example shown the pivot pins 8 are directed outwards and upwards relative to the axis H of the vehicle. Although it is possible for this to apply to only one of the pivot pins 8, it is preferable for both pivot pins 8 to be directed outwards and upwards. A result of such a construction is shown in Fig. 2b. In this figure it can be seen that as a result of the orientation of the pivot pins 8 in a swivel position of the subframe 4 relative to the main frame 2, one of the bearing frames 7 is directed upwards from the pivot pin and one of the bearing frames 7 is directed downwards from the.pivot pin. The wheel 5 which in the swivel position of the subframe 4, and in the swivel position of said corresponding wheel 5, describes the inside of a bend during movement of the vehicle 1, as shown in Fig. 2b, is lifted up slightly in a view in which the wheel 3 remains straight up. The wheel 5 which in a swivel position of the subframe 4 and a swivel position of said corresponding wheel 5 describes the outside of a bend during movement of the vehicle 1, in that case is forced down slightly. The vertical movement of the wheels relative to an idle position in which the wheels 5 are situated when the subframe and the wheels 5 are situated in a neutral position relative to the main frame and the subframe respectively is shown in Fig. 3a. Of course, when the vehicle is in use, in order to take a bend each wheel will rest on the ground surface and the vehicle will therefore tilt slightly towards the inside of the bend when taking the bend. In the process the centre of gravity of the vehicle is also shifted slightly in the direction of the inside of the bend. Fig. 3a indicates to what extent the vehicle could tilt when taking a bend. The tilt here is 3.59°. The bend to be negotiated is shown diagrammatically by the arrow B in Figs. 1b en 4b.

It is preferable during a swivelling of the subframe 4 relative to the main frame in a selected swivelling direction for the vehicle to cause a swivel of each bearing frame relative to the subframe in a direction which relative to the axis H of the vehicle is opposite to the selected swivelling direction. It can therefore be seen in, for example, Fig. 1b that when the subframe swivels in the direction of arrow B, the bearing arms swivel in the direction of arrow T. The wheel which follows the outside of the bend is thus moved outwards relative to the swivel pin 6. A reset moment is defined as the moment of the centre of gravity of the vehicle 1 about the point of contact of the outside wheel. Because of the movement T, this reset moment is greater towards the outside,thanks to the invention.

The transmission is designed in such a way that each swivel position of the subframe 4 relative to the main frame 2 leads to a predetermined swivel position of each bearing frame 7 relative to the subframe 4.

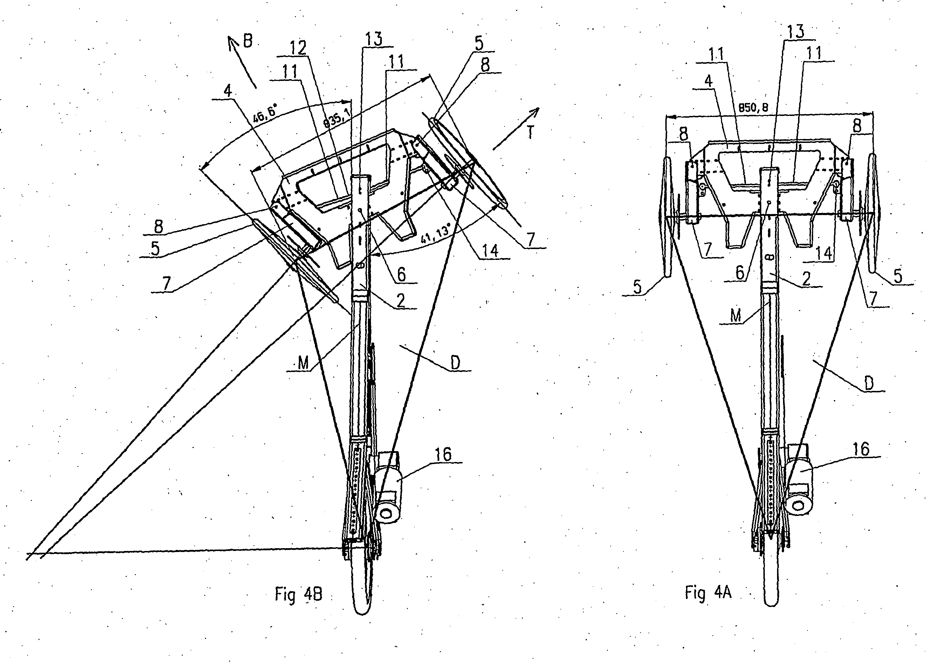

It is preferable, as shown in Figs. 1a and 1b, and Figs. 4a and 4b, for the adjusting mechanism to comprise at least two rods 11 which are each swivellably connected at a first end 12 to an action point 13 of the main frame 2. Each bearing frame 7 is preferably swivellably connected at a drive position 14 of the bearing frame 7 to a second end 15 of one of the rods 11. When the subframe 4 swivels, these rods 11 ensure that the corresponding bearing frames 7 swivel in the desired direction about the corresponding pivot pin 8. As can be seen in Fig. 4b, this helps to ensure that the wheels 5 can assume a mutually different degree of swivel relative to the axis H.

In a neutral position of the subframe 4 relative to the main frame 2 it is preferable for the at least one action point of the main frame, viewed in the direction of the axis of the vehicle, to lie further away from the centre point M of the vehicle than the swivel pin 6. This can be seen in Figs. 1a and 1b and Figs. 4a and 4b.

As shown in Figs. 1a and 1b, and 4a and 4b, the drive position of the bearing frames can be situated substantially between the corresponding pivot pin and the corresponding wheel axle. It is, however, also conceivable for this drive position to be situated in such a way that the wheel axle is situated between the drive position and the corresponding pivot pin. For a special embodiment of a vehicle according to the invention the bearing arms can each be provided with a plurality of drive positions in order to optimize the use. For instance, it is possible for a selected drive position to be closer to the corresponding pivot pin than is shown.

As stated earlier, the vehicle can comprise a cycle, for example a carrier cycle, possibly provided with a motor 16, as shown in Figs 3a, 3b and 4a, 4b. This can be a small carrier, for example for accommodating shopping or goods for delivery. It can, however, also be a carrier which is provided with one or two bucket seats which can serve as seating for children or possibly even for adults. In the latter case the vehicle could also be in the form of a rickshaw. The subframe, main frame and bearing frame are preferably made of a metal, preferably steel, in particular stainless steel, or for example a lightweight metal such as aluminium. It is possible for a distance between the two wheels 5 to be less than a width of a door opening, so that the vehicle can be moved through, for example, a shed door. It has been found that with a distance of, for example, 75 cm between the wheels the vehicle can function well.

The invention is by no means limited to the example shown. Many variants are possible. It is, for example, conceivable for the main frame to be provided with two subframes, namely both one on the front side and one on the rear side of the main frame. It is also possible for the vehicle to be in a form which is suitable for invalids or semi-invalids. Such variants are also considered to fall within the framework of the invention.

In addition to the embodiments shown, many variants are possible within the scope of the invention. For instance, other vehicles can also advantageously be designed according to the principle of the invention, such as motorized vehicles, for urban and/or high-speed traffic. Furthermore, vehicles can have more than three wheels, such as four wheels, in which case two or all four of the wheels can be provided with the adjusting mechanism according to the invention.

The main frame can have a substantial width, for,example in an embodiment for a four-wheeled vehicle. The main frames, subframes and bearing frames can be tubular frames, plate-type frames or three-dimensionally formed frames, for example made from a plastic in a mould. The connecting means, in particular the connecting means between the subframe and the bearing frames, can also be sliding connections, in order to move the corresponding bearing frame with wheel outwards in this way. The rotating connecting means do not need to be provided with a physical pin, but can also rotate about an imaginary point of rotation.

Furthermore, an alternative adjusting mechanism is possible, for example an adjusting mechanism which comprises a geared transmission and/or an adjusting mechanism with a motor drive. Various aspects of the invention can also advantageously be used separately, alone or in combinations other than the combination shown. For instance, the way in which the subframe is tilted, i.e. by making the corresponding wheels move up and down, is advantageous per se.

The invention thus provides a vehicle with at least three wheels, the stability and roadholding of which are greatly improved compared with known vehicles. Moreover, the solution according to the invention is simple compared with the known solution, and it requires fewer parts, is less fragile and is less dependent on the speed at which the vehicle is being used.

## Claims

1. Vehicle (1), comprising
a main frame (2), provided with at least a first wheel (3), which main frame and first wheel extend substantially in a longitudinal direction of the vehicle,
a subframe (4) connected to the main frame (2) at a distance from the first wheel,
a left bearing frame (7), movably connected to the subframe and at a left wheel position (9) provided with a left wheel,
a right bearing frame (7), movably connected to the subframe and at a right wheel position (9) provided with a right wheel, and
first connecting means (6) connecting the main frame to the subframe (4) and second connecting means (8) connecting the bearing frames (7) to the subframe (4), wherein the first and second connecting means (6, 8) connect the main frame and the bearing frames to the subframe in such a way that the left and the right bearing frames can swivel relative to the main frame in order to make the vehicle in use follow a bend, the left or the right wheel following an outside of the bend, wherein
the first connecting means comprise swivelling means with a swivel axis or a real swivel pin (6), swivellably connecting the main frame and the subframe in order to determine a direction of movement of the vehicle in use, **characterized by**
an adjusting mechanism (11) which acts upon the bearing frames to make the wheel which is following the outside of the bend move away from the swivelling means, in order to increase the stability of the vehicle.

2. Vehicle according to claim 1, in which the adjusting mechanism (11) is connected to the main frame (2) in such a way that a swivel of the subframe relative to the main frame (2) drives the adjusting mechanism (11) in order to make the wheel which is following the outside of the bend move away from the swivelling means.

3. Vehicle according to claim 2, in which the adjusting mechanism comprises a left and a right push/pull rod (11), each of which is swivellably connected at a first end (12) to an action point (13) of the main frame (2) and is swivellably connected at a second end (15) to a drive position (14) of the left and right bearing frames (7) respectively.

4. Vehicle according to claim 3, in which in a neutral position of the subframe the left and right push/pull rods (11) do not stand at right angles relative to the longitudinal direction on the main frame (2), in order to make the bearing frames (7) swivel to different degrees when there is a certain swivel of the subframe.

5. Vehicle according to one of claims 1-4, in which the left and right wheel positions (9) in a neutral position of the subframe (4) are each at a shorter distance from the first wheel than the swivel pin (6).

6. Vehicle according to one of the preceding claims, in which the second connecting means comprise left and right rotation means, with pivot axes or real pivot pins(8), for swivellably connecting the left and right bearing frames (7) respectively to the subframe (4).

7. Vehicle according to claim 6, in which the left and right pivot axes or pivot pins (8) are directed outwards and upwards relative to the axis of the vehicle in order to make the subframe (4) tilt when the bearing frames (7) swivel about the corresponding pivot pins.

8. Vehicle according to one of claims 6 or 7, in which the left and right wheel positions (9) are each at a shorter distance from the first wheel (3) than the corresponding pivot pins (8).

9. Vehicle according to one of claims 3 or 4, in combination with one of claims 6, 7, or 8, in which the left and right push/pull rods (11) respectively each cross an imaginary line from the swivel pin (6) to the corresponding pivot pin (8).

## Patentansprüche

1. Fahrzeug (1) mit
einem Grundrahmen (2), der mit wenigstens einem ersten Rad (3) versehen ist, wobei sich der Grundrahmen und das erste Rad im Wesentlichen in einer Längsrichtung des Fahrzeugs erstrecken,
einem Unterrahmen (4), der mit dem Grundrahmen (2) in einem Abstand vom ersten Rad verbunden ist,
einem linken Stützrahmen (7), der beweglich mit dem Unterrahmen verbunden ist und an einer linken Radposition (9) mit einem linken Rad versehen ist,
einem rechten Stützrahmen (7), der mit dem Unterrahmen beweglich verbunden ist und an einer rechten Radposition (9) mit einem rechten Rad versehen ist, und
einer ersten Verbindungseinrichtung (6), welche den Grundrahmen mit dem Unterrahmen (4) verbindet, und einer zweiten Verbindungseinrichtung (8), welche die Stützrahmen (7) mit dem Unterrahmen (4) verbindet, wobei die erste und zweite Verbindungseinrichtung (6, 8) den Grundrahmen und die Stützrahmen mit dem Unterrahmen verbinden, derart, dass sich der linke und der rechte Stützrahmen relativ zum Grundrahmen verdrehen können, um dem Fahrzeug bei Benutzung zu ermöglichen, einer Kurve zu folgen, wobei das linke oder das rechte Rad einer Außenseite der Kurve folgen, wobei
die erste Verbindungseinrichtung eine Schwenkeinrichtung mit einer Schwenkachse oder einem realen Schwenkzapfen (6) umfasst, welcher den Grundrahmen und den Unterrahmen schwenkbar verbindet, um eine Bewegungsrichtung des Fahrzeugs bei Benutzung zu bestimmen, **gekennzeichnet durch**
einen Einstellmechanismus (11), welcher auf die Stützrahmen wirkt, um das Rad, welches der Außenseite der Kurve folgt, sich weg von der Schwenkeinrichtung bewegen zu lassen, um die Stabilität des Fahrzeugs zu erhöhen.

2. Fahrzeug nach Anspruch 1, in welchem der Einstellmechanismus (11) mit dem Grundrahmen (2) derart verbunden ist, dass eine Schwenkbewegung des Unterrahmens relativ zum Grundrahmen (2) den Einstellmechanismus (11) steuert, um das Rad, welches der Außenseite der Kurve folgt, sich von der Schwenkeinrichtung weg bewegen zu lassen.

3. Fahrzeug nach Anspruch 2, in welchem der Einstellmechanismus eine linke und eine rechte Schub/Zug-Stange (11) umfasst, von denen jede jeweils schwenkbar an einem ersten Ende (12) mit einer Wirkstelle (13) des Grundrahmens (2) verbunden ist und an einem zweiten Ende (15) mit einer Steuerposition (14) des linken und rechten Stützrahmens (7) verbunden ist.

4. Fahrzeug nach Anspruch 3, in welchem in einer neutralen Position des Unterrahmens die linke und rechte Schub/Zug-Stange (11) nicht in einem rechten Winkel relativ zur Längsrichtung des Grundrahmens (2) steht, um die Stützrahmen (7) in unterschiedlichem Maße schwenken zu lassen, wenn eine gewisse Schwenkbewegung des Unterrahmens vorliegt.

5. Fahrzeug nach einem der Ansprüche 1 bis 4, in welchem die linke und rechte Radposition (9) in einer neutralen Position des Unterrahmens (4) jeweils in einem kürzeren Abstand von dem ersten Rad liegt als der Schwenkzapfen (6).

6. Fahrzeug nach einem der vorhergehenden Ansprüche, in welchem die zweite Verbindungseinrichtung eine linke und rechte Dreheinrichtung umfasst, mit Drehachsen oder realen Drehzapfen (8), um den linken und rechten Stützrahmen (7) jeweils mit dem Unterrahmen (4) schwenkbar zu verbinden.

7. Fahrzeug nach Anspruch 6, in welchem die linke und rechte Drehachse nach außen und oben relativ zu den Achsen des Fahrzeugs gerichtet sind, um den Unterrahmen (4) eine Neigung zu verleihen, wenn sich die Stützrahmen (7) um die korrespondierenden Drehzapfen schwenken.

8. Fahrzeug nach einem der Ansprüche 6 oder 7, in welchem die linke und die rechte Radposition (9) jeweils in einem kürzeren Abstand von dem ersten Rad (3) als die korrespondierenden Drehzapfen (8) liegen.

9. Fahrzeug nach einem der Ansprüche 3 oder 4, in Kombination mit einem der Ansprüche 6, 7 oder 8, in welchem die linke und rechte Schub/Zug-Stange (11) jeweils eine gedachte Linie vom Schwenkzapfen (6) zu den korrespondierenden Drehzapfen (8) kreuzt.

## Revendications

1. Véhicule (1) comprenant :
un châssis principal (2) prévu avec au moins une première roue (3), lequel châssis principal et la première roue s'étendent sensiblement dans une direction longitudinale du véhicule,
un sous-châssis (4) raccordé au châssis principal (2) à une certaine distance de la première roue,
un châssis de support gauche (7), raccordé de manière mobile au sous-châssis et dans une position de roue gauche (9) prévue avec une roue gauche,
un châssis de support droit (7), raccordé de manière mobile au sous-châssis et dans une position de roue droite (9) prévue avec une roue droite, et
des premiers moyens de raccordement (6) raccordant le châssis principal au sous-châssis (4) et des seconds moyens de raccordement (8) raccordant les châssis de support (7) au sous-châssis (4), dans lequel les premiers et seconds moyens de raccordement (6, 8) raccordent le châssis principal et les châssis de support au sous-châssis de sorte que les châssis de support gauche et droit peuvent pivoter par rapport au châssis principal afin que le véhicule puisse, à l'usage, suivre un virage, la roue gauche ou droite suivant un extérieur du virage, dans lequel
les premiers moyens de raccordement comprennent des moyens de pivotement avec un axe de pivot à rotule ou une véritable broche de pivot à rotule (6) raccordant par pivot à rotule le châssis principal et le sous-châssis afin de déterminer une direction de mouvement du véhicule à l'usage,
**caractérisé par**
un mécanisme d'ajustement (11) qui agit sur les châssis de support pour permettre à la roue qui suit l'extérieur du virage de s'éloigner des moyens de pivotement, afin d'augmenter la stabilité du véhicule.

2. Véhicule selon la revendication 1, dans lequel le mécanisme d'ajustement (11) est raccordé au châssis principal (2) de sorte qu'un pivot à rotule du sous-châssis par rapport au châssis principal (2) entraîne le mécanisme d'ajustement (11) afin de permettre à la roue qui suit l'extérieur du virage de s'éloigner des moyens de pivotement.

3. Véhicule selon la revendication 2, dans lequel le mécanisme d'ajustement comprend des tiges de poussée / traction gauche et droite (11), dont chacune est raccordée par pivot à rotule au niveau d'une première extrémité (12) à un point d'actionnement (13) du châssis principal (2) et est raccordée par pivot à rotule au niveau d'une seconde extrémité (15) à une position d'entraînement (14) des châssis de support gauche et droit (7) respectivement.

4. Véhicule selon la revendication 3, dans lequel dans une position neutre du sous-châssis, les tiges de poussée / traction gauche et droite (11) ne sont pas positionnées en angle droit par rapport à la direction longitudinale sur le châssis principal (2), afin de permettre aux châssis de support (7) de pivoter selon différents degrés lorsqu'il y a un certain pivotement du sous-châssis.

5. Véhicule selon l'une des revendications 1 à 4, dans lequel les positions de roue gauche et droite (9) dans une position neutre du sous-châssis (4) sont chacune à une plus courte distance de la première roue que la broche de joint à rotule (6).

6. Véhicule selon l'une quelconque des revendications précédentes, dans lequel les seconds moyens de raccordement comprennent des moyens de rotation gauche et droit, avec des axes de pivot ou de véritables broches de pivot (8) pour raccorder par pivot à rotule les châssis de support gauche et droit (7) respectivement au sous-châssis (4).

7. Véhicule selon la revendication 6, dans lequel les axes de pivot ou broches de pivot gauche et droit (8) sont dirigés vers l'extérieur et vers le haut par rapport à l'axe du véhicule afin de permettre au sous-châssis (4) de s'incliner lorsque les châssis de support (7) pivotent autour des broches de pivot correspondantes.

8. Véhicule selon l'une quelconque des revendications 6 ou 7, dans lequel les positions de roue gauche et droite (9) sont chacune à une plus courte distance de la première roue (3) que les broches de pivot (8) correspondantes.

9. Véhicule selon l'une quelconque des revendications 3 ou 4, en combinaison avec l'une quelconque des revendications 6, 7 ou 8, dans lequel les tiges de poussée / traction gauche et droite (11) traversent respectivement chacune une ligne imaginaire de la broche de pivot à rotule (6) à la broche de pivot (8) correspondante.
